# EUROPEAN PATENT APPLICATION

(11) **EP 4 528 988 A1**
(43) Date of publication of application: **26.03.2025**
(21) Application number: 23807616.0
(22) Date of filing: 15.05.2023
(51) Int. Cl.: H02K 1/18, H02K 3/44

(54) **STATOR AND ROTATING ELECTRIC MACHINE**

(30) Priority: 16.05.2022 JP 2022080006
(71) Applicant: DENSO CORPORATION, Kariya-city, Aichi 448-8661 (JP)
(72) Inventor: WATANABE, Yuki, Kariya-city, Aichi 4488661 (JP); SUZUKI, Takumi, Kariya-city, Aichi 4488661 (JP); SANTO, Shinji, Kariya-city, Aichi 4488661 (JP)
(74) Representative: Kuhnen & Wacker Patent- und Rechtsanwaltsbüro PartG mbB
(86) International application number: PCT/JP2023/018169
(87) International publication number: WO 2023/224014

(57) **Abstract**

A stator (11) includes a stator core (20), a bobbin (30), a coil (40), and a pressing member (50). The stator core (20) is formed of a plurality of core sheets (24) stacked in an axial direction. The stator core (20) has an annular yoke portion (25) and teeth (23) extending inwardly from the yoke portion. The bobbin (30) covers the teeth. The coil (40) is wound on the bobbin. The pressing member (50) has an abutting part (54) that contacts an axial end surface (25a) of the yoke portion.

## Description

### CROSS-REFERENCE TO RELATED APPLICATIONS

This application is based on Japanese Application No. 2022-080006 filed on May 16, 2022, the disclosure of which is incorporated herein by reference.

### TECHNICAL FIELD

The present disclosure relates to a stator and a rotating electric machine.

### BACKGROUND

For example, the stator described in Patent Document 1 includes a stator core formed of a plurality of core sheets stacked in an axial direction. The stator core has an annular yoke portion and teeth extending radially inward from the yoke portion. Coils are wound around the teeth. The stator core is accommodated in a housing with an outer peripheral surface of the yoke portion in contact with an inner peripheral surface of the housing.

### PRIOR ART DOCUMENT

### PATENT DOCUMENT

Patent Document 1: JP 2010-288424 A

### SUMMARY OF INVENTION

In the above-described stator, for example, there is a risk that a portion of the core sheet that constitutes the yoke portion may buckle due to a force that the yoke portion receives from the housing.

An object of the present disclosure is to provide a stator and a rotating electric machine capable of suppressing buckling of a core sheet.

In a first aspect of the present disclosure, a stator is formed of a plurality of core sheets stacked in an axial direction, and includes a stator core having an annular yoke portion and teeth extending inward from the yoke portion, a bobbin covering the teeth, a coil wound around the bobbin, and a pressing member having an abutting part abutting an axial end surface of the yoke portion.

In a second aspect of the present disclosure, a rotating electric machine includes a stator and a rotor facing the stator, and the stator is formed of a plurality of core sheets stacked in an axial direction, and includes a stator core having an annular yoke portion and teeth extending inward from the yoke portion, a bobbin covering the teeth, a coil wound around the bobbin, and a pressing member having an abutting part abutting an axial end surface of the yoke portion.

According to the above-described stator and rotating electric machine, the pressing member having the abutting part that abuts against the axial end surface of the yoke portion makes it possible to suppress buckling of a portion of the core sheet that constitutes the yoke portion.

### BRIEF DESCRIPTION OF THE DRAWINGS

The above and other objects, features and advantages of the present disclosure will become more apparent from the following detailed description made with reference to the accompanying drawings.

In the drawings,
FIG. 1 is a schematic diagram of a rotating electric machine according to an embodiment;
FIG. 2 is a perspective view showing a stator of the same embodiment, partially in section;
FIG. 3 is a schematic cross-sectional view of a stator of the same embodiment;
FIG. 4 is a schematic side view of a stator of the same embodiment;
FIG. 5 is a schematic side view of a stator according to a modified example; and
FIG. 6 is a schematic side view of a stator according to a modified example.

### DETAILED DESCRIPTION

Hereinafter, an embodiment of a stator and a rotating electric machine will be described with reference to the drawings. In the drawings, a part of the configuration may be exaggerated or simplified for convenience of description. Furthermore, the dimensional ratios of each component may differ between the drawings.

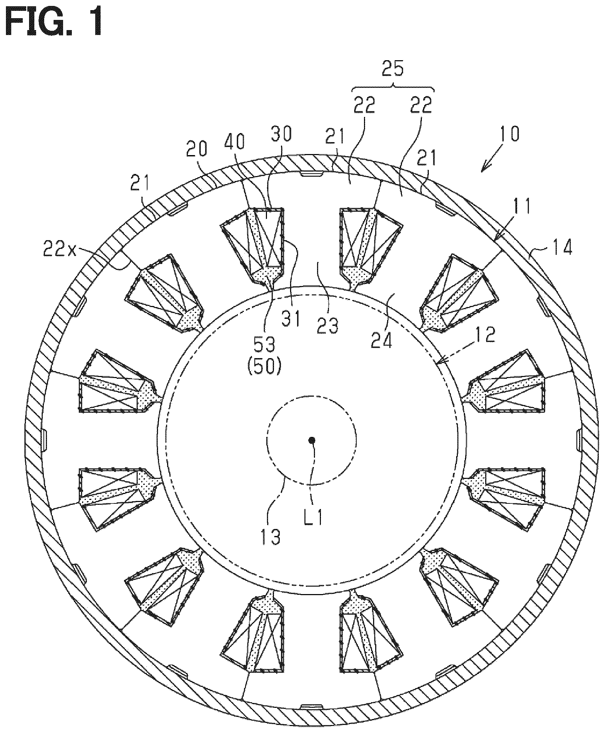

As shown in FIG. 1, a rotating electric machine 10 includes a stator 11 and a rotor 12 facing the stator 11. The stator 11 has an annular shape. The rotor 12 is disposed inside the stator 11. The rotor 12 has a rotating shaft 13. The rotor 12 faces the stator 11 in a radial direction. The stator 11 is accommodated in a cylindrical housing 14. The stator 11 is accommodated in the housing 14 by, for example, shrink fitting.

### (Configuration of stator 11)

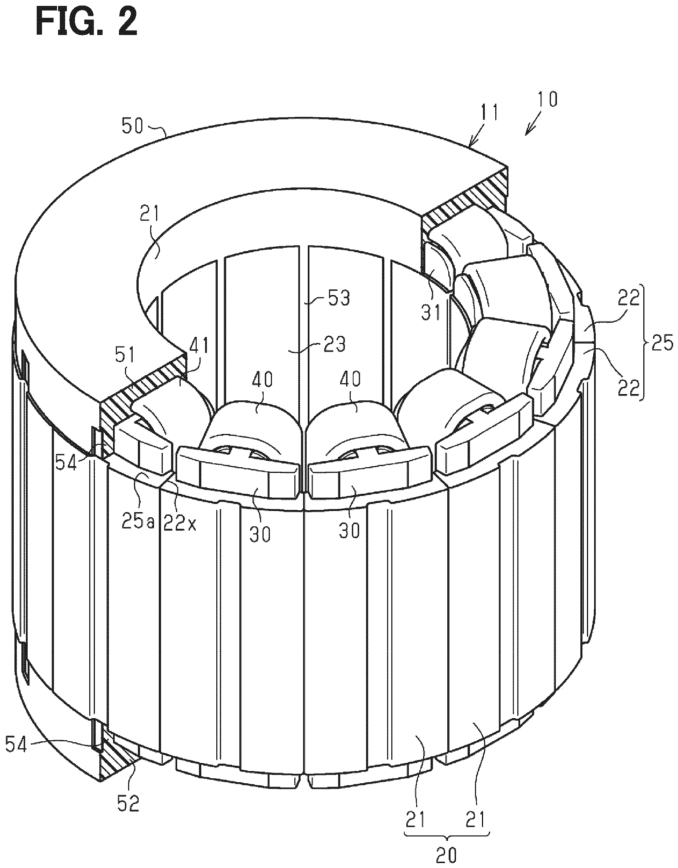

As shown in FIGS. 1 and 2, the stator 11 includes a stator core 20, a bobbin 30, a coil 40, and a resin molded portion 50 serving as a pressing member. In addition, FIG. 2 shows a part of the resin molded portion 50 in cross section.

The stator core 20 has a plurality of split cores 21 arranged in an annular shape along a circumferential direction of the stator 11. For example, twelve split cores 21 are provided. The stator core 20 has, for example, twelve split cores 21. Each split core 21 is made of, for example, a magnetic metal material. In the following description, a circumferential direction of the stator 11, a radial direction of the stator 11, and an axial direction of the stator 11 may be simply referred to as the "circumferential direction," the "radial direction," and the "axial direction," respectively.

Each split core 21 has a core back 22 and teeth 23 extending in the radial direction from the core back 22. The multiple split cores 21 are arranged in the circumferential direction such that the core backs 22 as a whole form an annular shape. Each of the teeth 23 extends in the radial direction.

In each split core 21, the teeth 23 protrude, for example, radially inward from an inner surface of the core back 22. The tips of the teeth 23 face an axis L1 of the stator 11. The base ends of the teeth 23 are the radially outer ends of the teeth 23.

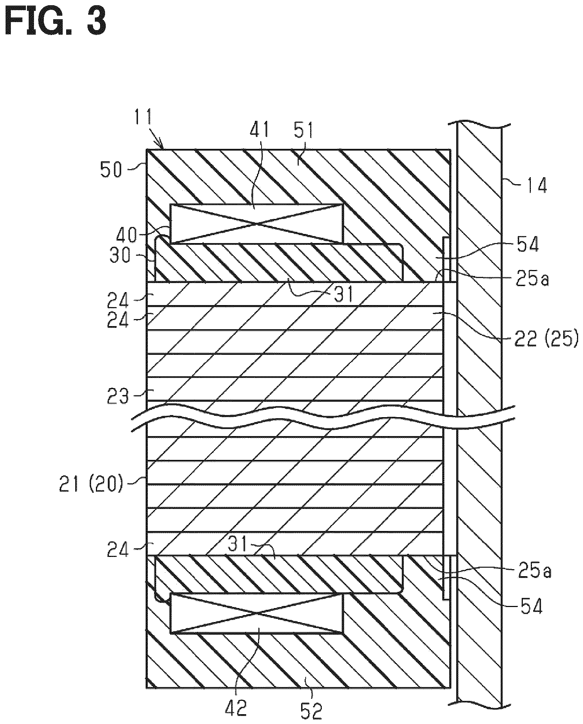

As shown in FIG. 3, each split core 21 is formed of a plurality of core sheets 24 stacked in the axial direction. Each core sheet 24 is made of, for example, an electromagnetic steel plate. The core sheets 24 are fixed to one another by, for example, adhesion.

As shown in Figs. 1 and 2, in a state in which the split cores 21 are arranged in an annular shape in the circumferential direction, the core backs 22 of the split cores 21 are arranged in an annular shape along the circumferential direction. Each core back 22 constitutes an annular yoke portion 25. Each core back 22 is in contact with the adjacent core backs 22 on both sides in the circumferential direction. A radially outer surface of each core back 22 forms an outer peripheral surface of a yoke portion 25. The outer peripheral surface of the yoke portion 25, i.e., a radially outer surface of each core back 22, is in contact with an inner peripheral surface of the housing 14. Each tooth 23 extends radially inward from the yoke portion 25.

As shown in FIG. 3, on each of both axial sides of the stator core 20, the axial end surface of each core back 22 forms an axial end surface 25a of the yoke portion 25. The axial end surfaces of each core back 22 are located, for example, on the same plane perpendicular to the axis L1. That is, the axial end surfaces 25a on both axial sides of the yoke portion 25 are flat and perpendicular to the axis L1.

Each split core 21 is provided with a bobbin 30. For example, a plurality of bobbins 30 are provided corresponding to the plurality of split cores 21, respectively. The bobbin 30 has a tooth covering portion 31 that covers the tooth 23. The coil 40 is wound around each tooth covering portion 31. That is, the tooth covering portion 31 of the bobbin 30 is interposed between the split core 21 and the coil 40. As a result, the bobbin 30 provides electrical insulation between the split core 21 and the coil 40. Each of the split core 21, the bobbin 30, and the coil 40 constitutes a single integrated part.

The bobbin 30 is made of an insulating material such as synthetic resin. The bobbin 30 may be made of a material such as epoxy resin. The bobbin 30 is, for example, molded to the split core 21. That is, it is formed integrally with the split core 21. This allows the bobbin 30 to be in close contact with the split core 21.

In addition, as a configuration different from that of the present embodiment, for example, when a bobbin manufactured separately from the split core 21 is later attached to the split core 21, there is a concern that a large gap may occur between the split core 21 and the bobbin. In this regard, by molding the bobbin 30 to the split core 21 as in the present embodiment, it is possible to eliminate the gap between the split core 21 and the bobbin 30 or to make the gap extremely small.

### (Configuration of resin molded portion 50)

As shown in FIG. 2, the resin molded portion 50 collectively covers, for example, the multiple coils 40. As shown in FIG. 3, the coil 40 has a first end 41 as one axial end and a second end 42 as the other axial end. The resin molded portion 50 has a first covering portion 51 that covers the first end 41 of the coil 40, and a second covering portion 52 that covers the second end 42 of the coil 40. The first covering portion 51 covers the axial outside of the first end 41 of the coil 40 and both radial sides of the first end 41. The second covering portion 52 covers the axially outer side of the second end 42 of the coil 40 and both radially opposite sides of the second end 42.

As shown in FIGS. 1 and 2, the resin molded portion 50 has a connecting portion 53 that passes between the teeth 23 adjacent to each other in the circumferential direction and connects the first covering portion 51 and the second covering portion 52. The connecting portions 53 are filled between each of the teeth 23. The first covering portion 51 and the second covering portion 52 are connected to each other by a plurality of connecting portions 53.

In the stator 11, for example, an integral part including the split core 21, the bobbin 30, and the coil 40 is arranged in an annular shape. Thereafter, each coil 40 is electrically connected by, for example, a bus bar. Thereafter, for example, the resin molded portion 50 is molded so as to collectively cover each of the coils 40, each of the bobbins 30, the bus bars, and the like.

The resin molded portion 50 is formed of, for example, a resin having a higher thermal conductivity than the bobbin 30. The resin molded portion 50 may be made of, for example, a material obtained by mixing alumina powder with epoxy resin or unsaturated polyester resin. The thermal conductivity of the bobbin 30 is set to, for example, 1.0 (W/m·K). In contrast, the thermal conductivity of the resin molded portion 50 is preferably set to, for example, 2.0 (W/m·K) or more.

Moreover, it is preferable that the resin molded portion 50 has a structure with a large spring constant. When the spring constant of the resin molded portion 50 is large, it is possible to keep the volume of the resin molded portion 50 necessary for suppressing the buckling of the yoke portion 25 small. As a result, the weight of the resin molded portion 50 can be reduced.

As shown in FIGS. 2 and 3, each of the first covering portion 51 and the second covering portion 52 has an abutting part 54 that abuts against the axial end surface 25a of the yoke portion 25. The abutting part 54 of the first covering portion 51 abuts in the axial direction against the axial end surface 25a on one axial side. The abutting part 54 of the second covering portion 52 abuts in the axial direction against the axial end surface 25a on the other axial side. That is, the abutting parts 54 of the first covering portion 51 and the second covering portion 52 are provided so as to sandwich the yoke portion 25 in the axial direction.

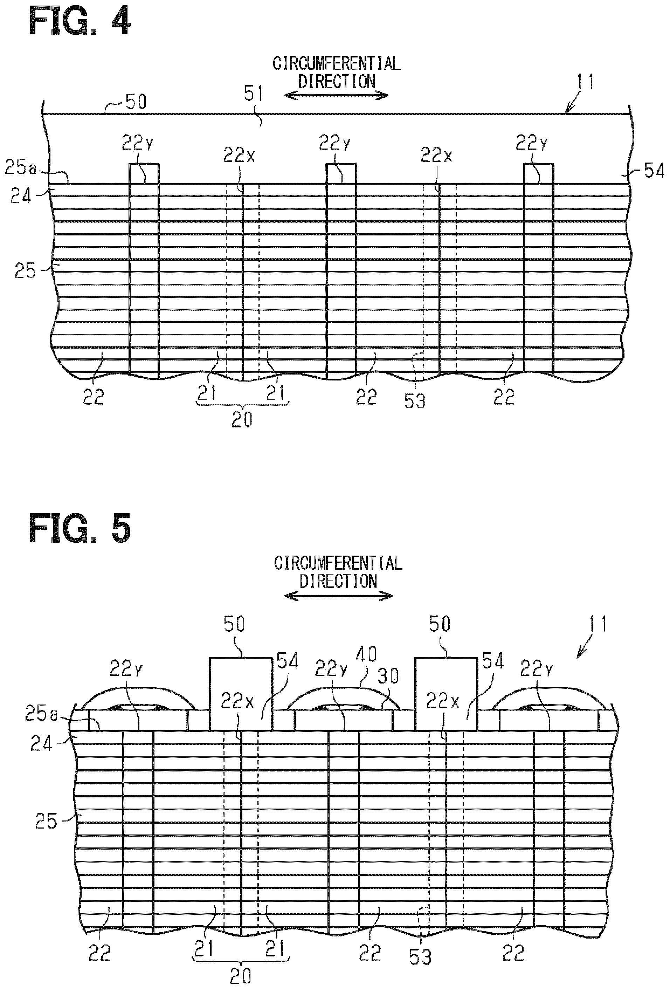

In the present embodiment, the abutting part 54 has a continuous annular shape along the circumferential direction. The abutting part 54 contacts each axial end surface 25a over the entire circumferential direction of the yoke portion 25. That is, as shown in FIG. 4, the abutting part 54 contacts the axial end surface 25a at a boundary portion 22x where the core backs 22 adjacent in the circumferential direction are in contact with each other. Further, the abutting part 54 contacts the axial end surface 25a at the circumferential center portion 22y of each core back 22.

The operation of the present embodiment will be described.

The yoke portion 25 of the stator core 20 receives a radially inward force from the housing 14. When the stator core 20 is assembled to the housing 14 by shrink fitting, the yoke portion 25 receives a radially inward force from the housing 14 more significantly. Then, a force is generated in each of the core backs 22 constituting the yoke portion 25 in a direction in which they approach each other in the circumferential direction. Therefore, when no measures are taken, there is a risk that the core sheet 24 in each core back 22 constituting the yoke portion 25 may buckle due to stress during shrink fitting, for example.

Therefore, in the present embodiment, the abutting part 54 of the resin molded portion 50 abuts against the axial end surface 25a of the yoke portion 25. As a result, when each core back 22 constituting the yoke portion 25 receives force from the housing 14, the abutting part 54 presses the axial end surface 25a of the yoke portion 25, thereby suppressing buckling of the portion of the core sheet 24 that constitutes the core back 22. In addition, the force that tends to buckle the yoke portion 25 acts in a direction expanding to both sides in the axial direction, and this force is received by each of the abutting part 54 of the first covering portion 51 and the second covering portion 52. Here, since the first covering portion 51 and the second covering portion 52 are connected by the connecting portion 53, the force exerted by the yoke portion 25 to buckle can be preferably received by each abutting part 54 of the first covering portion 51 and the second covering portion 52.

Furthermore, the rotor 12 rotates due to interaction with a rotating magnetic field generated in the stator 11 by energizing each coil 40. At this time, the coil 40 generates heat by energizing. A part of the heat of the coil 40 is dissipated to the outside via the resin molded portion 50. An example of the heat dissipation path is a heat dissipation path that transmits from the coil 40 through the resin molded portion 50 to the stator core 20. Furthermore, by forming the resin molded portion 50 from a material having a higher thermal conductivity than the bobbin 30, it is possible to further improve heat dissipation properties.

The effects of the present embodiment will be described.
(1) The stator 11 includes the resin molded portion 50 serving as a pressing member having the abutting part 54 that abuts against the axial end surface 25a of the yoke portion 25. According to this configuration, the resin molded portion 50 having the abutting part 54 that abuts against the axial end surface 25a of the yoke portion 25 makes it possible to suppress buckling of the portion of the core sheet 24 that constitutes the yoke portion 25.

In addition, since the abutting part 54 suppresses buckling of the core sheets 24, crimping for fixing the core sheets 24 to each other is not required, or the number of crimping points can be minimized. This makes it possible to reduce iron loss caused by crimping in the flow of magnetic flux inside the core sheet 24. As a result, this can contribute to increasing the output of the rotating electric machine 10.

Furthermore, since the abutting part 54 prevents the core sheet 24 from buckling, no adhesive is required to fix the core sheets 24 to each other. In other words, it is possible to have a structure in which the core sheets 24 are not fixed to each other. In this case, since no adhesive is used to bond the core sheets 24 together, it is possible to achieve a configuration with excellent heat resistance.

(2) The stator core 20 is made up of a plurality of split cores 21 arranged in the circumferential direction. Each of the multiple split cores 21 has the core back 22 that constitutes the yoke portion 25 and the teeth 23 extending from the core back 22. According to this configuration, the yoke portion 25 is formed by the core backs 22 of the respective split cores 21. Therefore, each divided core back 22 is more likely to buckle due to the force received from the housing 14. Therefore, the buckling suppression effect of the abutting part 54 can be more significantly obtained.

(3) The abutting part 54 abuts against the axial end surface 25a of the yoke portion 25 over the entire circumferential direction. According to this configuration, in each core back 22, it is possible for the abutting part 54 to press both the boundary portion 22x and the circumferential center portion 22y, where buckling is likely to occur. Therefore, the abutting part 54 can more effectively suppress buckling of the yoke portion 25.

(4) The resin molded portion 50 covers the coil 40. The coil 40 has the first end 41 as one axial end and the second end 42 as the other axial end. The resin molded portion 50 has the first covering portion 51 covering the first end 41 of the coil 40, the second covering portion 52 covering the second end 42 of the coil 40, and the connecting portion 53 passing between circumferentially adjacent coils 40 and connecting the first covering portion 51 and the second covering portion 52. The abutting part 54 is included in each of the first covering portion 51 and the second covering portion 52. According to this configuration, the abutting part 54 of the first covering portion 51 and the abutting part 54 of the second covering portion 52 sandwich the yoke portion 25 in the axial direction. Further, the first covering portion 51 and the second covering portion 52 are connected to each other by the connecting portion 53. Therefore, the abutting parts 54 can more effectively suppress buckling of the yoke portion 25 on both axial sides of the yoke portion 25.

(5) The stator core 20 has a plurality of teeth 23 arranged in the circumferential direction. A plurality of coils 40 are provided corresponding to the plurality of teeth 23, respectively. The resin molded portion 50 covers the multiple coils 40 collectively. It is possible to improve the heat dissipation properties of the coil 40 via the resin molded portion 50. As a result, this can contribute to increasing the output of the rotating electric machine 10.

(6) The resin molded portion 50 is made of a material having a higher thermal conductivity than the bobbin 30. It is possible to further improve the heat dissipation properties of the coil 40 via the resin molded portion 50.

### (Modifications)

The above-described embodiments may be modified as follows. The above-described embodiments and the following modifications can be implemented in combination with one another as long as there is no technical contradiction.

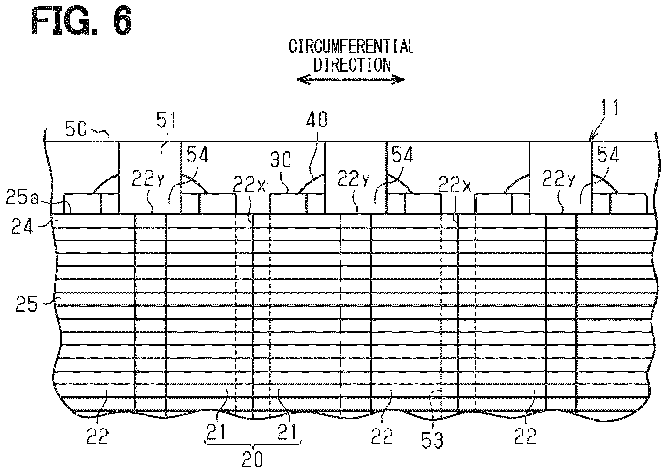

For example, as shown in FIG. 5 or FIG. 6, the abutting part 54 may be configured to partially contact the axial end surface 25a of the yoke portion 25 in the circumferential direction. With this configuration, the volume of the resin molded portion 50 can be reduced. As a result, this can contribute to reducing the weight of the stator 11.

In the configuration shown in FIG. 5, the abutting parts 54 contact the axial end surfaces 25a at the boundary portions 22x where the core backs 22 adjacent in the circumferential direction are in contact with each other. According to such a configuration, it is possible to reduce the weight of the resin molded portion 50 while suppressing buckling of the boundary portions 22x of the core back 22, which is prone to buckling. In this case, the resin molded portion 50 including the abutting parts 54 may be configured to be scattered in the circumferential direction. Also, as shown in FIG. 5, the resin molded portion 50 may not cover the axially outer side of the coil 40.

In the configuration shown in FIG. 6, the abutting parts 54 contact the axial end surface 25a at the circumferential center portion 22y of each core back 22. With this configuration, it is possible to reduce the weight of the resin molded portion 50 while suppressing buckling of the circumferential center portion 22y of the core back 22, which is prone to buckling.

The resin molded portion 50 may be formed of a material having the same thermal conductivity as the bobbin 30 or a material having a lower thermal conductivity than the bobbin 30.

Each core sheet 24 may be fixed to each other by, for example, crimping. Additionally, each core sheet 24 may be fixed to each other by, for example, caulking or adhesive. Additionally, each core sheet 24 may be fixed to one another by welding, such as laser welding.

An adhesive may be used to temporarily fix the core sheets 24 together until the resin molded portion 50 is formed. In this case, the adhesive strength is sufficient if it is strong enough to form the resin molded portion 50, so there are few restrictions on the selection of the adhesive material.

The stator core 20 does not need to be formed by the plurality of split cores 21, and may be formed as an integrated part. Even in this configuration, the abutting part 54 can suppress buckling of the portion of the core sheet 24 that constitutes the yoke portion 25.

In the above embodiment, the bobbin 30 is molded to the stator core 20. However, the present disclosure is not limited to this configuration. For example, a configuration in which a separately manufactured bobbin is attached to the stator core 20 may be used.

The number of split cores 21 and the number of teeth 23 are not limited to those in the above embodiment and may be changed as appropriate depending on the configuration.

The rotating electric machine 10 in the above embodiment is an inner rotor type rotating electric machine in which the rotor 12 is arranged on the inner side of the stator 11, but it may also be applied to, for example, an outer rotor type rotating electric machine in which the rotor is arranged on the outer side of the stator.

Although the present disclosure has been described in accordance with the examples, it is understood that the present disclosure is not limited to such examples or structures. The present disclosure encompasses various modifications and variations within the scope of equivalents. In addition, while the various combinations and configurations, which are preferred, other combinations and configurations, including more, less or only a single element, are also within the spirit and scope of the present disclosure.

### (Supplementary note)

The features of the present disclosure are as follows.
[1] A stator including: a stator core (20) formed of a plurality of core sheets (24) stacked in an axial direction, the stator core having an annular yoke portion (25) and teeth (23) extending inward from the yoke portion; a bobbin (30) covering the teeth; a coil (40) wound around the bobbin; and a pressing member (50) having an abutting part (54) abutting against an axial end surface (25a) of the yoke portion.
[2] The stator described in the above-mentioned [1], wherein the stator core is composed of a plurality of split cores (21) arranged along a circumferential direction, and each of the plurality of split cores has a core back (22) constituting the yoke portion and the teeth extending from the core back.
[3] The stator according to the above-mentioned [1] or [2], wherein the abutting part abuts against the axial end surface over the entire circumferential direction of the yoke portion.
[4] The stator according to the above-mentioned [2], wherein the abutting part abuts partially in the circumferential direction of the yoke portion against the axial end surface.
[5] The stator according to the above-mentioned [4], wherein the abutting part contacts the axial end surface at a boundary portion (22x) where the core backs adjacent in the circumferential direction contact each other.
[6] The stator according to the above-mentioned [4], wherein the abutting part contacts the axial end surface at a circumferential center portion (22y) of the core back.
[7] The stator described in any one of the above-mentioned [1] to [6], wherein the pressing member is a resin molded portion (50) covering the coil, the coil has one axial end (41) and the other axial end (42), the resin molded portion has a first covering portion (51) covering the one axial end of the coil, a second covering portion (52) covering the other axial end of the coil, and a connecting portion (53) connecting the first covering portion and the second covering portion, and the abutting part is included in each of the first covering portion and the second covering portion.
[8] The stator described in the above-mentioned [7], the stator core has a plurality of teeth arranged along the circumferential direction, a plurality of coils are provided corresponding to each of the teeth, and the resin molded portion covers the plurality of coils collectively.
[9] The stator according to the above-mentioned [7] or [8], wherein the resin molded portion is formed of a material having a higher thermal conductivity than the bobbin.
[10] A rotating electric machine (10) includes a stator (11) and a rotor (12) facing the stator, and the stator is formed of a plurality of core sheets (24) stacked in an axial direction, and includes a stator core (20) having an annular yoke portion (25) and teeth (23) extending inward from the yoke portion, a bobbin (30) covering the teeth, a coil (40) wound around the bobbin, and a pressing member (50) having an abutting part (54) abutting an axial end surface (25a) of the yoke portion.

## Claims

1. A stator, comprising:
a stator core (20) formed of a plurality of core sheets (24) stacked in an axial direction, and having an annular yoke portion (25) and teeth (23) extending from the yoke portion to an inner peripheral side;
a bobbin (30) configured to cover the teeth;
a coil (40) wound around the bobbin; and
a pressing member (50) having an abutting part (54) that contacts an axial end surface (25a) of the yoke portion.

2. The stator according to claim 1, wherein
the stator core is composed of a plurality of split cores (21) arranged along a circumferential direction, and
each of the plurality of split cores has a core back (22) that constitutes the yoke portion, and the teeth extending from the core back.

3. The stator according to claim 1 or 2, wherein
the abutting part abuts against the axial end surface over the entire circumferential direction of the yoke portion.

4. The stator according to claim 2, wherein
the abutting part abuts partially in the circumferential direction of the yoke portion on the axial end surface.

5. The stator according to claim 4, wherein
the abutting part contacts the axial end surface at a boundary portion (22x) where the core backs adjacent in the circumferential direction are in contact with each other.

6. The stator according to claim 4, wherein
the abutting part contacts the axial end surface at a circumferential center portion (22y) of the core back.

7. The stator according to claim 1, wherein
the pressing member is a resin molded portion (50) that covers the coil,
the coil has one axial end (41) and another axial end (42),
the resin molded portion has a first covering portion (51) covering one axial end portion of the coil, a second covering portion (52) covering the other axial end portion of the coil, and a connecting portion (53) connecting the first covering portion and the second covering portion, and
the abutting part is included in each of the first covering portion and the second covering portion.

8. The stator according to claim 7, wherein
the stator core has a plurality of the teeth arranged along a circumferential direction,
a plurality of coils are provided corresponding to the plurality of teeth, respectively, and
the resin molded portion collectively covers the plurality of coils.

9. The stator according to claim 7 or 8, wherein
the resin molded portion is made of a material having a higher thermal conductivity than the bobbin.

10. A rotating electric machine (10) comprising:
a stator (11); and
a rotor (12) facing the stator, wherein
the stator includes:
a stator core (20) formed of a plurality of core sheets (24) stacked in an axial direction, and having an annular yoke portion (25) and teeth (23) extending from the yoke portion to an inner peripheral side;
a bobbin (30) configured to cover the teeth;
a coil (40) wound around the bobbin; and
a pressing member (50) having an abutting part (54) that contacts an axial end surface (25a) of the yoke portion.
